# EUROPÄISCHE PATENTSCHRIFT

(11) **EP 1 378 073 B1**
(45) Veröffentlichungstag und Bekanntmachung des Hinweises auf die Patenterteilung: **06.07.2005**
(21) Anmeldenummer: 02732604.0
(22) Anmeldetag: 11.04.2002
(51) Int. Cl.: H04B 7/155, H04L 12/56

(54) **VERFAHREN ZUM LEITEN VON DATEN IN EINEM MOBILEN KOMMUNIKATIONSNETZ UND KOMMUNIKATIONSNETZ-VORRICHTUNG ZUM DURCHFÜHREN EINES SOLCHEN VERFAHRENS**
METHOD FOR ROUTING DATA IN A MOBILE COMMUNICATIONS NETWORK AND A COMMUNICATIONS NETWORK DEVICE FOR CARRYING OUT SUCH A METHOD
PROCEDE D'ACHEMINEMENT DE DONNEES DANS UN RESEAU DE COMMUNICATION MOBILE ET DISPOSITIF RESEAU POUR LA MISE EN OEUVRE DUDIT PROCEDE

(30) Priorität: 11.04.2001 DE 10118188; 11.04.2001 EP 01109053
(43) Veröffentlichungstag der Anmeldung: 07.01.2004
(73) Patentinhaber: SIEMENS AKTIENGESELLSCHAFT, 80333 München (DE)
(72) Erfinder: LEHMANN, Gerald, 12101 Berlin (DE); MEILING, Axel, 13597 Berlin (DE); DOLD, Joachim, 10823 Berlin (DE); JARBOT, Lutz, 13465 Berlin (DE)
(86) Internationale Anmeldenummer: PCT/EP2002/004059
(87) Internationale Veröffentlichungsnummer: WO 2002/084899

(56) Entgegenhaltungen:
- DE-A- 19 726 956
- JAIN R ET AL: "GEOGRAPHICAL ROUTING USING PARTIAL INFORMATION FOR WIRELESS AD HOC NETWORKS" IEEE PERSONAL COMMUNICATIONS, IEEE COMMUNICATIONS SOCIETY, US, Bd. 8, Nr. 1, 1. Februar 2001 (2001-02-01), Seiten 48-57, XP001006641 ISSN: 1070-9916

## Beschreibung

Die Erfindung bezieht sich auf ein Verfahren zum Leiten von Daten in einem mobilen Kommunikationsnetz mit den oberbegrifflichen Merkmalen des Anspruchs 1 und eine Kommunikationsnetz-Vorrichtung zum Durchführen eines solchen Verfahrens.

Bei derzeitigen Kommunikationsnetzen mit mobilen Teilnehmern besteht das eigentliche Netz aus einer oder mehreren ortsfesten Netz- bzw. Basisstationen, die in einem Bereich um sich herum eine Funkzelle aufbauen. Innerhalb dieser Funkzelle befindliche Teilnehmer-Stationen können über die Funkschnittstelle mit der Netzstation kommunizieren, die ihrerseits die Verbindung zu anderen Netzeinrichtungen weitervermitteln kann.

Für die Zukunft werden Mobilfunksysteme diskutiert, bei denen das Kommunikationsnetz anstelle von ortsfesten Netzstationen mobile Endgeräte bzw. Stationen aufweist. Das bedeutet, dass ortsfeste Basisstationen nicht mehr benötigt werden, da Informationen und Daten direkt von Endgerät zu Endgerät weitergegeben werden. Dabei sind Sprünge zur Weiterleitung der Daten über mehrere, nicht direkt an der Kommunikation beteiligte Teilnehmer vorgesehen. Das Netz ist somit zeitlich variant und benötigt zum Übertragen von Daten zwischen zwei entfernten Stationen eine Mindestanzahl an dazwischen befindlichen Stationen, die als Relaisstationen dienen. Im extremsten Fall sind die sendende Station, die Relaisstation(en) und die empfangende Station alles mobile Stationen, die sich z.B. in Fahrzeugen befinden und mit diesen bewegen. Bei solchen mobilen Netzen besteht jedoch das Problem des Leitens der Daten bzw. Informationen über mehrere nicht ortsfeste Stationen.

Erste diskutierte Leitweg-Vermittlungsstrategien sehen Leitweg- bzw. Routingtabellen vor, in denen die besten Leitwege eingetragen werden. Solche Verfahren sind jedoch nachteilhaft, da diese Tabellen jeder Station zur Verfügung gestellt werden müssten, was einen großen Signalisierungsaufwand erforderlich machen würde, der die Effizienz des gesamten Systems stark einschranken würde. Außerdem ändert sich das Netz im Falle sich schnell bewegender Stationen sehr schnell, so dass die Tabellen fortwährend an die neuen Bedingungen angepasst werden müssten, was ebenfalls Kapazitäten der Stationen binden würde. Weitere erörterte Routingalgorithmen gehen insbesondere von der Voraussetzung aus, dass zumindest bestimmte Stationen ortsfeste Netzstationen sind, sind also ebenfalls nicht anwendbar.

Das Dokument "Jain et al: Geographical Routing using partial Information for Wireless ad hoc Networks, IEEE Personal Communications, IEEE Communications Society, US, Februar 2001, Band 8, Nummer 1, Seiten 48-57" beschreibt ein Routing-Verfahren, bei dem jede Station eine Routing-Tabelle gespeichert hat. Diese Tabellen weisen als Eintrage bestimmte Stationen, deren geographische Positionen und Nachbarstationen auf. Soll ein Paket zu einer Zielstation versendet werden, sucht eine Station aus ihrer Routing-Tabelle den geeignetsten Nachbarn unter Bildung einer metrischen Differenz aus.

Das Dokument DE 197 26 956 beschreibt ein Verfahren, bei welchem zum Herstellen einer Verbindung jeder als Übermittler dienende Netzteilnehmer seine Ortsinformation mit der des Zielteilnehmers vergleicht, um über eine Weiterleitung zu einem Nachbarn zu entscheiden. Somit wird eine Festlegung des aktuellen Weges zum Zielteilnehmer iterativ bzw. schrittweise gebildet.

Die Aufgabe der Erfindung besteht darin, bei mobilen Netzen ein alternatives Verfahren zum Leiten von Daten bzw. Informationen über mehrere nicht ortsfeste Stationen vorzuschlagen.

Diese Aufgabe wird durch ein Verfahren zum Leiten von Daten in einem mobilen Kommunikationsnetz mit den Merkmalen des Anspruchs 1 bzw. durch Kommunikationsnetz-Vorrichtungen zum Durchführen eines solchen Verfahrens mit den Merkmalen des Anspruchs 8 gelöst.

Das Verfahren zum Leiten von Daten in einem Kommunikationsnetz mit nicht ortsgebundenen Relaisstationen, bei dem von einer ersten Station Daten über einen Leitweg zu einer Ziel-Station übertragen werden, und die Daten bei nicht direkter Übertragungsmöglichkeit von der ersten Station zur Ziel-Station während der Übertragung auf dem Leitweg von Relaisstation empfangen und weiterversendet werden, ist besonders vorteilhaft, wenn die Bestimmung des Leitwegs in der ersten Station und/oder in Relaisstationen durchgeführt oder aktualisiert wird.

Eine Kommunikationsnetz-Station zum Durchführen eines solchen Verfahrens ist mit einem Prozessor zum Verarbeiten von Informationen über die Ziel-Station und/oder Relaisstationen und von Leitweginformationen, mit einem Speicher zum Speichern von leitwegrelevanten Informationen, einer Sende- und Empfangseinrichtung zum Senden und Empfangen von zu übertragenden Daten und einer Positionsbestimmungseinrichtung zum Bestimmen der eigenen momentanen Position der Station ausgestattet und ist vorteilhafterweise baulich und funktionell als Sende-, Relais- und Ziel-Station zugleich ausgebildet.

Vorteilhafte Ausgestaltungen sind Gegenstand von abhängigen Ansprüchen.

Die Bestimmung des Leitwegs anhand von Karten mit Verkehrswegen, Besiedlungsangaben und/oder topographischen Informationen durchzuführen ermöglicht eine mobile Leitwegbestimmung unter Berücksichtigung favorisierbarer Strecken und Relaisstationen. Die Bestimmung des Leitwegs anhand von Suchprogrammen zum insbesondere statistischen und/oder iterativen Ermitteln eines optimierten Leitweges durchzuführen ist beim Fehlen solcher Daten oder zu deren Ergänzung vorteilhaft.

Die Daten können gemäß diesem Verfahren vorteilhafterweise als Paketdaten von Station zu Station übertragen werden oder kontinuierlich nach dem Aufbau einer durchgehenden Verbindung über den Leitweg.

Die Stationen und/oder Relaisstationen, insbesondere die sendende Station kennen zweckmäßigerweise ihren aktuellen Aufenthaltsort, so dass sie selber eine Leitwegplanung optimiert vornehmen können. Die Bestimmung des Leitwegs in der ersten Station und/oder in Relaisstationen mittels eines Verkehrsrouten-Planungssystems und/oder eines Autonavigationssystems und/oder Verkehrsdichtedaten durchzuführen unterstützt diese Möglichkeit.

In den Stationen, die den Leitweg bestimmen, Informationen über zumindest die benachbarten Stationen, deren momentan und/oder geplante Bewegungsrichtungen, Übertragungskapazitäten und/oder voraussichtlichen Enden der Einschaltzeiten zu verwenden, macht eine Anpassung an sich ändernde Leitwegbedingungen auch in Relaisstationen möglich.

Den Daten Leitwegdaten über einen bevorzugten oder bestimmten Leitweg aufzuprägen oder beizufügen ermöglicht einerseits die Vorgabe von Leitwegen, so dass nicht in jeder Relaisstation eine erneute Bestimmung vorgenommen werden muss. Einen Verfallszeitpunkt aufzuprägen oder beizufügen verhindert unnötige Netzbelastungen bei herumirrenden Daten, zu denen z.B. aufgrund geänderter Leitwegbedingungen, weder Absender noch Ziel-Station erreichbar sind.

In Leitwegdaten und/oder Stationen Informationen über direkt oder zeitlich versetzt zurückerhaltene Daten und/oder regionale und/oder zeitliche priorisierte Leitwege abzuspeichern bietet den Vorteil, sackgassenartige Leitwege gar nicht oder zumindest nicht wiederholt zu verwenden oder für die Übertragung besonders sichere Leitwege zu auszuwählen.

Ein Ausführungsbeispiel ist nachfolgend anhand der Zeichnung näher erläutert. Es zeigt:

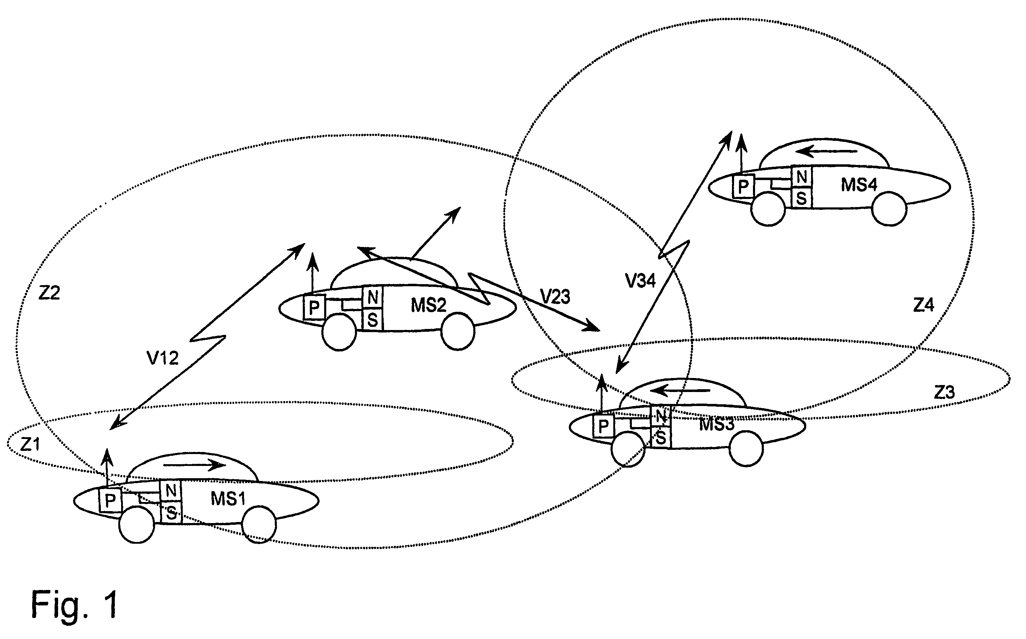

- Fig. 1: schematisch ein mobiles Netz mit mehreren mobilen Stationen, über die Daten übertragen werden.

Wie aus Fig. 1 ersichtlich, besteht ein mobiles bzw. offenes Netz aus einer Vielzahl von Stationen MSi (i = 1,2,3,...), die miteinander kommunizieren. Jede der Stationen MSi bildet dabei um sich herum eine eigene Funkzelle Zi (i = 1,2,3,...) aus. Verbindungen zwischen Stationen MSi, MSj können über eine Funkschnittstelle Vij (i = 1,2,3,...; j = 1,2,3,...) aufgebaut werden, wenn sich eine erste Station MS1 in der Funkzelle Z2 einer zweiten Station MS2 befindet.

Natürlich müssen die einzelnen Stationen nicht zwangsweise alle mobil sein, sondern können auch stationär betrieben werden. Weiterhin ist auch der Datenaustausch im vorstehenden Sinne über einzelne Schnittstellen möglich, die z.B. aufgrund lokaler Gegebenheiten, wie größeren nicht befahrbaren bzw. befahrenen Bereichen, nicht als Funkschnittstelle sondern als z.B. verkabelte Schnittstelle zwischen zwei stationären Stationen ausgebildet sind, sofern diese stationären Stationen mit den mobilen Stationen nach den entsprechenden Standards kommunizieren können.

Sollen Daten, insbesondere Datenpakete von einer ersten Station MS1 zu einer entfernten dritten Station MS3 übertragen werden, deren Funkzellen Z1 bzw. Z3 nicht zu der jeweils anderen Station MS3 bzw. MS1 reichen, so können die Daten auch über Relaisstationen übertragen werden. Im vorliegenden Beispiel befindet sich die erste Station MS1 im Bereich der Funkzelle Z2, kann also eine Funkschnittstelle V12 aufbauen und darüber mit dieser zweiten Station MS2 kommunizieren.

Daraufhin baut die zweite Station MS2, in deren Funkzelle Z2 sich auch die dritte Station MS3 befindet, eine Funkschnittstelle V23 auf, sofern diese nicht bereits eingerichtet ist.

Die Übertragung der Daten von der ersten Station MS1 zur dritten Station MS3 erfolgt dann unter Zwischenschaltung der zweiten Station MS2 als Relaisstation über die Funkschnittstellen V12 und V23. Dabei können die Daten wahlweise zeitlich versetzt als Block von Station zu Station übertragen werden oder aber auch direkt über beide Funkschnittstellen V12 und V23 nach dem Aufbau einer durchgehenden Verbindung. In letzterem Fall ist im Extremfall sogar eine kontinuierliche Übertragung in zwei Richtungen möglich.

Um ein Informations- bzw. Datenpaket korrekt zu übertragen, sollten vorzugsweise folgende Bedingungen erfüllt sein. Die an der Übertragung beteiligten Stationen MS1 - MS3, zumindest aber die sendende und die abschließend empfangenden Stationen MS1 bzw. MS3, sollten ihren aktuellen Aufenthaltsort kennen. Dazu weisen die Stationen MSi vorzugsweise ein Verkehrsrouten-Planungssystem mit GPS-Ankopplung (GPS: Global Positioning System). Für den Fall des Einsatzes einer mobilen Station MSi in einem Kraftfahrzeug kann darin vorteilhafterweise eine Anbindung der zentralen Rechnereinrichtung an ein im Kraftfahrzeug eingesetztes Autonavigationssystem N erfolgen.

Ferner sollten in allen Stationen MSi Informationen über die momentan oder in absehbarer Zeit benachbarten Stationen MSi vorliegen oder für diese mittels z.B. eines Rundrufs auf einem Suchkanal (Paging) beschaffbar sein. Solche Informationen können z.B. Daten über Aufenthaltsort, momentan und/oder geplante Fahrtroute/Bewegungsrichtung, Übertragungskapazität oder voraussichtliches Ende der Einschaltzeit sein. In der bevorzugtesten Ausführungsform kennt die sendende oder verbindungsanfordernde Station MS1 auch die Daten, insbesondere Position der empfangenden bzw. gerufenen Ziel-Station MS3.

Wenn Daten versendet werden sollen, ermittelt insbesondere die sendende Station MS1 den kürzesten Leitweg (Route) für die erforderlichen Datenverbindungen. In erster Näherung ist dies die kürzeste Fahrtstrecke. Dieser Leitweg wird den Daten z.B. in einem Kopfabschnitt (Header) aufgeprägt, woraufhin die Daten bzw. das Datenpaket von der sendenden Station MS1 auf den Weg geschickt wird. Im vorliegenden Beispiel erfolgt die Sendung von der ersten Station MS1 aus über die erste Schnittstelle V12 zur zweiten Station MS2. Von der zweiten Station MS2, die als Relaisstation dient, werden diese Daten dann über die zweite Schnittstelle V23 zur dritten Station MS3 weitergeleitet, die hier zugleich die Ziel-Station ist. Im Falle weiter entfernter Stationen MS4 kann die Weiterleitung auch über eine Vielzahl von Relaisstationen erfolgen, bis die Daten an ihrem Ziel eintreffen.

Falls eine Relaisstation feststellt, dass eine Weiterleitung entlang dem ursprünglich besten Leitweg z.B. durch einen Richtungswechsel der Station MS3 nicht möglich oder z.B. aus Kapazitätsgründen nicht sinnvoll ist, kann diese Relaisstation MS2 in bevorzugter Ausführungsform einen neuen idealen Leitweg berechnen und anstelle der bisherigen Daten in den Kopfabschnitt einsetzen. Möglich ist auch das Aufprägen alternativer Leitwege.

Dadurch können die Daten bei Bedarf umgeleitet werden, so dass eine Rücksendung oder gar ein Totalverlust vermieden werden können. Zur Vermeidung von Netzüberbelastungen von "ziellos" weitergeleiteten Daten, zu denen weder Empfänger noch Ansender ermittelbar sind, kann auch ein Verfallszeitpunkt aufgeprägt sein, zu dem diese Daten verfallen bzw. gelöscht werden.

Insbesondere ist auch die Weiterleitung der Daten in Richtungen sinnvoll, die zwar nicht dem kürzest möglichen Leitweg entsprechen, dafür aber einem sicheren Leitweg. Dadurch kann vermieden werden, dass die Daten durch eine Region übertragen werden, in der sich nur selten oder in nicht ausreichender Überdeckung Stationen MSi befinden. Dadurch können "Sackgassen", die eine Rücksendung zur Folge hätten, oder Verluste durch plötzlich in alle Richtungen abgeschnittene Relaisstationen vermieden werden. Bevorzugte Leitwege können durch dicht besiedelte Bereiche oder längs stark befahrener Straßen priorisiert eingeplant werden.

Zur Vermeidung des wiederholten Weiterleitens der Daten in Sackgassen hinein, können in den Stationen MSi entsprechende Informationen über direkt oder zeitlich versetzt zurückerhaltene Daten abgespeichert werden. Als Speicher kann in der Station MSi insbesondere ein Speicher S verwendet werden, in dem auch die erforderlichen Systemdaten hinterlegt sind. Alternativ oder zusätzlich können auch den Daten selber entsprechende Informationen über vergeblich zurückgelegte Strecken aufgeprägt werden.

Im Fall der gezielten Leitwegplanung, z.B. längs stark befahrener Straßen, kann in einem Verkehrsplaner, der nicht notwendig ein Straßenverkehrsplaner sein muss, auch eine Klassifizierung der Straßen hinsichtlich der mittleren oder zeitabhängigen Verkehrsdichte vorgenommen werden. Diese Informationen können dann bei der Planung oder der Neuplanung eines Leitwegs berücksichtigt werden. Im Idealfall können sogar aktuell ermittelte Verkehrsdichtewerte der Region für die Planung eingesetzt werden.

Falls die Leitweginformation zu lang ist, um sie den Daten direkt vollständig aufzuprägen, kann auch ein reduzierter Informationssatz aufgeprägt werden, der insbesondere die Ziel-Station MS3 und z.B. eine Richtungsinformation enthält. Die Relaisstationen MS2 ermitteln dann, sofern sie baulich und programmtechnisch entsprechend ausgestattet sind, jeweils den von ihrem momentanen Standort gunstigsten weiteren Leitweg zum Weiterversand. Diese Funktion kann natürlich auch zur Aktualisierung eines vollständig abgespeicherten Leitwegs (V12-V23) verwendet werden. Ebenfalls möglich ist das Aufprägen von Abschnitten eines Leitweges, so dass nur z.B. jede dritte Station MSi eine Berechnung des weiteren Leitweges vornehmen braucht, um dadurch Berechnungskapazitäten zu sparen.

In der bevorzugtesten Ausführungsform sind in den Leitwege berechnenden Stationen MSi Karten mit Verkehrswegen, Besiedlungsangaben und/oder topographischen Informationen zugänglich.

In allgemeinster Ausführungsform können die Daten von der ersten Station MS1 sogar ohne deren Kenntnis über den Aufenthaltsort der Ziel-Station MS3 versendet werden. In einem solchen Fall sollten eine Rückadresse oder eine Löschanweisung mit einem Verfallsdatum gekoppelt werden. Insbesondere sollte eine Startrichtung vorgegeben werden oder eine Relaisstation, die eine zielgerichtete Leitwegbestimmung durchführen kann. Möglich ist auch der Einsatz von Suchprogrammen zum z.B. statistischen oder iterativen Ermitteln eines idealen Leitweges.

## Patentansprüche

1. Verfahren zum Leiten von Daten in einem Kommunikationsnetz mit nicht ortsgebundenen Relaisstationen (MS2, MS3), bei dem
- von einer ersten Station (MS1) Daten über einen Leitweg zu einer Ziel-Station (MS3; MS4) übertragen werden,
- die Daten bei nicht direkter Übertragungsmöglichkeit von der ersten Station (MS1) zur Ziel-Station (MS3; MS4) während der Übertragung auf dem Leitweg von mindestens einer Relaisstation (MS2; MS2, MS3) empfangen und weiterversendet werden,
- die Bestimmung des Leitwegs in der ersten Station (MS1) und/oder in der mindestens einen Relaisstation (MS2; MS2, MS3) durchgeführt oder aktualisiert wird,
**dadurch gekennzeichnet, dass**
- die Bestimmung des Leitwegs anhand von Karten mit Verkehrswegen, Besiedlungsangaben und/oder topographischen Informationen durchgeführt wird.

2. Verfahren nach Anspruch 1, bei dem
die Bestimmung des Leitwegs anhand von Suchprogrammen zum insbesondere iterativen Ermitteln eines optimierten Leitweges durchgeführt wird.

3. Verfahren nach einem vorstehenden Anspruch, bei dem
die erste Station (MS1) und/oder die Zielstation (MS3; MS4) und/oder die mindestens eine Relaisstation (MS2; MS2, MS3) ihren aktuellen Aufenthaltsort kennt.

4. Verfahren nach einem vorstehenden Anspruch, bei dem
die Bestimmung des Leitwegs in der ersten Station (MS1) und/oder in der mindestens einen Relaisstation (MS2; MS2, MS3) mittels eines Verkehrsrouten-Planungssystems und/oder eines Autonavigationssystems (N) und/oder Verkehrsdichtedaten durchgeführt wird.

5. Verfahren nach einem vorstehenden Anspruch, bei dem
in der oder den Stationen (MS1, MS2, MS3), die den Leitweg bestimmen, Informationen über zumindest die benachbarten Stationen (MS1, MS2, MS3), deren momentan und/oder geplante Bewegungsrichtungen, Übertragungskapazitäten und/oder voraussichtlichen Enden der Einschaltzeiten verwendet werden.

6. Verfahren nach einem vorstehenden Anspruch, bei dem
den Daten Leitwegdaten über einen bevorzugten oder bestimmten Leitweg und/oder ein Verfallszeitpunkt aufgeprägt oder beigefügt werden.

7. Verfahren nach einem vorstehenden Anspruch, bei dem
in Leitwegdaten und/oder Stationen (Ms1, MS2, MS3, MS4) Informationen über zurückerhaltene Daten und/oder regionale und/oder zeitliche priorisierte Leitwege abgespeichert werden.

8. Kommunikationsnetz-Station (Ms1; MS2; MS3; MS4) zum Durchführen eines Verfahrens nach einem vorstehenden Anspruch, mit
- einem Prozessor zum Verarbeiten von Informationen über die Ziel-Station (MS3; MS4) und/oder Relaisstationen (MS2; MS2, MS3) und von Leitweginformationen,
- einem Speicher (S) zum Speichern von leitwegrelevanten Informationen,
- einer Sende- und Empfangseinrichtung zum Senden und Empfangen von zu übertragenden Daten ,
- einer Positionsbestimmungseinrichtung (P) zum Bestimmen der eigenen momentanen Position der Station (Ms1; MS2; MS3; MS4)
**dadurch gekennzeichnet, dass** sie weiterhin aufweist:
- einen Zugang zu Karten mit Verkehrswegen, Besiedlungsangaben und/oder topographischen Informationen.

## Claims

1. Method for routing data (d) in a communication network with non-stationary relay stations (MS2, MS3), according to which
- data is transmitted from a first station (MS1) via a route to a destination station (MS3),
- if it is impossible to transmit the data directly from the first station (MS1) to the destination station (MS3; MS4), the data is received and relayed by at least one relay station (MS2; MS2, MS3) during the transmission on the route,
- the route is determined or updated in the first station (MS1) and/or in the at least one relay station (MS2; MS2, MS3)
**characterized in that**
- the route is determined using road maps, population density information and/or topographical information.

2. Method according to Claim 1, in which
the route can be determined by using search programs for, in particular, the iterative establishment of an optimized route.

3. Method according to one of the previous claims, in which
the first station (MS1) and/or the destination station (MS3; MS4) and/or the at least one relay station (MS2; MS2, MS3) knows its current location.

4. Method according to one of the previous claims, in which
the route is determined in the first station (MS1) and/or in the at least one relay station (MS2; MS2, MS3) by means of a route planning system and/or an autonavigation system (N) and/or traffic density data.

5. Method according to one of the previous claims, in which
information about at least the neighboring stations (MS1, MS2, MS3) their current and/or planned movement directions, transmission capacities and/or expected ends of the switch-on times is used in the stations (MS1, MS2, MS3) that determine the route.

6. Method according to one of the previous claims, in which
the data is endowed with route data about a preferred or specific route and/or an expiry time or said route data is added.

7. Method according to one of the previous claims, in which
information about data returned and/or regional routes and/or routes prioritized in time can be stored in route data and/or stations (Ms1, MS2, MS3, MS4).

8. Communication network station (Ms1; MS2; MS3; MS4) for carrying out a method according to one of the previous claims, with
- a processor for processing information about the destination station (MS3; MS4) and/or relay stations (MS2; MS2, MS3) and route information,
- a memory (S) for storing route-relevant information,
- a transmitting and receiving device for transmitting and receiving data to be transmitted,
- a position determining device (P) for determining the current position of the station (Ms1,; MS2; MS3; MS4)
**characterized in that** it further features:
- an access to road maps, population density information and/or topographical information.

## Revendications

1. Procédé d'acheminement de données dans un réseau de communication comprenant des stations relais non attachées à un lieu (MS2, MS3), dans lequel
- des données sont transmises d'une première station (MS1) vers une station cible (MS3; MS4) par un itinéraire d'acheminement,
- les données sont reçues par au moins une station relais (MS2; MS2, MS3) et réémises, pendant la transmission sur l'itinéraire d'acheminement, en cas de possibilité de transmission non directe de la première station (MS1) vers la station cible (MS3; MS4),
- la détermination de l'itinéraire d'acheminement est exécutée ou actualisée dans la première station (MS1) et/ou dans la au moins une station relais (MS2 ; MS2, MS3),
**caractérisé en ce que**
- la détermination de l'itinéraire d'acheminement est exécutée à l'aide de cartes comportant des voies de circulation, des indications de peuplement et/ou des informations topographiques.

2. Procédé selon la revendication 1, dans lequel la détermination de l'itinéraire d'acheminement est exécutée à l'aide de programmes de recherche permettant notamment la détermination itérative d'un itinéraire d'acheminement optimisé.

3. Procédé selon l'une des revendications précédentes, dans lequel la première station (MS1) et/ou la station cible (MS3; MS4) et/ou l'au moins une station relais (MS2; MS2, MS3) connaît leur lieu de séjour actuel.

4. Procédé selon l'une des revendications précédentes, dans lequel la détermination de l'itinéraire d'acheminement est exécutée dans la première station (MS1) et/ou dans la au moins une station relais (MS2 ; MS2, MS3) au moyen d'un système de planification de voies de circulation et/ou d'un système de navigation automatique (N) et/ou de données sur la densité du trafic.

5. Procédé selon l'une des revendications précédentes, dans lequel on utilise, dans la ou les station/s (MS1, MS2, MS3) qui détermine/nt l'itinéraire d'acheminement, des informations relatives au moins aux stations voisines (MS1, MS2, MS3), à leurs directions de déplacement momentanées et/ou planifiées, à leurs capacités de transmission et/ou à la fin probable des temps de connexion.

6. Procédé selon l'une des revendications précédentes, dans lequel on impose ou on ajoute aux données des données d'itinéraire d'acheminement relatives à un itinéraire d'acheminement privilégié ou déterminé et/ou un moment d'expiration.

7. Procédé selon l'une des revendications précédentes, dans lequel des informations sur les données récupérées et/ou des itinéraires d'acheminement régionaux et/ou des itinéraires d'acheminement prioritaires temporaires sont mémorisés dans les données d'itinéraire d'acheminement et/ou les stations (MS1, MS2, MS3, MS4).

8. Station de réseau de communication (MS1; MS2; MS3; MS4) pour la mise en oeuvre d'un procédé selon l'une des revendications précédentes, comprenant
- un processeur pour le traitement d'informations sur la station cible (MS3; MS4) et/ou les stations relais (MS2; MS2, MS3) et d'informations d'itinéraire d'acheminement,
- une mémoire (S) pour enregistrer des informations importantes concernant l'itinéraire d'acheminement,
- un dispositif émetteur et récepteur pour l'émission et la réception de données à transmettre,
- un dispositif de détermination de position (P) pour déterminer la position momentanée propre de la station (MS1; MS2; MS3; MS4),
**caractérisée en ce qu'**elle présente, en outre,
- un accès à des cartes comportant des voies de circulation, des indications de peuplement et/ou des informations topographiques.
